# FASCICULE DE BREVET EUROPEEN

(11) **EP 4 041 628 B1**
(45) Date de publication et mention de la délivrance du brevet: **26.06.2024**
(21) Numéro de dépôt: 20796627.6
(22) Date de dépôt: 02.10.2020
(51) Int. Cl.: B64C 11/30, B64C 11/40, F01D 7/00, F04D 29/32

(54) **SYSTÈME DE COMMANDE DE CALAGE CYCLIQUE DE PALES**
SYSTEM ZUR ZYKLISCHEN BLATTVERSTELLUNG
BLADE CYCLIC PITCH SETTING SYSTEM

(30) Priorité: 02.10.2019 FR 1910908
(43) Date de publication de la demande: 17.08.2022
(73) Titulaire: SAFRAN AIRCRAFT ENGINES, 75015 Paris (FR)
(72) Inventeur: BOUDEBIZA, Tewfik, 77550 MOISSY-CRAMAYEL (FR); AUSTRUY, Julien Michel Patrick Christian, 77550 MOISSY-CRAMAYEL (FR); CHARIER, Gilles Alain Marie, 77550 MOISSY-CRAMAYEL (FR); DJELASSI, Cedrik, 77550 MOISSY-CRAMAYEL (FR)
(74) Mandataire: Regimbeau
(86) Numéro de dépôt international: PCT/FR2020/051730
(87) Numéro de publication internationale: WO 2021/064333

(56) Documents cités:
- FR-A1- 2 996 591
- FR-A1- 2 997 138
- FR-A1- 3 067 415
- US-A- 4 252 498

## Description

### DOMAINE DE L'INVENTION

La présente invention concerne le domaine des systèmes de commande de calage cyclique de pales pour une hélice de turbomachine.

### ETAT DE LA TECHNIQUE

Le flux d'air en entrée des pales d'une hélice d'une turbomachine d'un aéronef peut présenter une incidence par rapport à l'axe de rotation des pales, qui correspond à l'axe longitudinal de la turbomachine. Les pales des hélices ou des fans de turbomachines sont alors soumises à une distribution de flux d'air qui n'est pas homogène au cours de leur rotation autour de l'axe longitudinal.

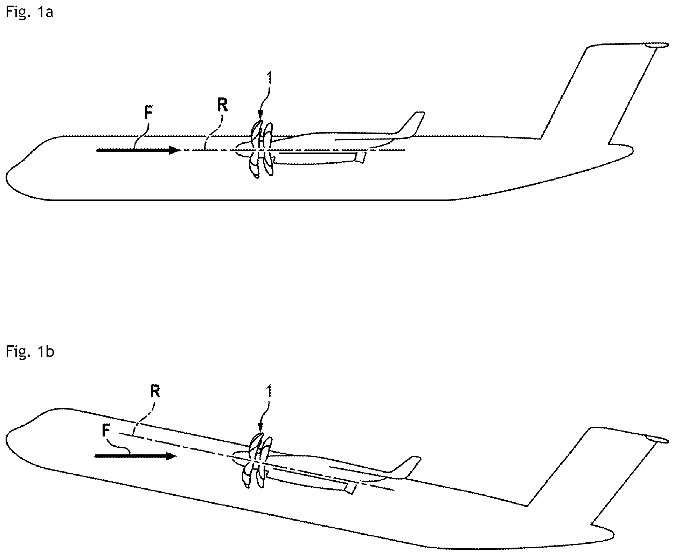

Cette incidence peut résulter de phases prédictibles, telles que des phases d'incidence ou des phases de manoeuvres, lors de montées, descentes ou virages qui peuvent entraîner un dérapage de l'aéronef. Cette incidence peut également résulter de phases non prédictibles, telles que des phases de vent de travers. La figure 1a illustre par exemple un avion en phase de croisière à altitude stabilisée, le flux d'air F en entrée des pales 1 de l'hélice étant dirigé dans la direction longitudinale correspondant à l'axe de rotation r de l'hélice. La figure 1b représente un avion en phase de montée, le flux d'air F comprenant une composante longitudinale dirigée selon l'axe de rotation de l'hélice et une composante transversale dans un plan perpendiculaire à l'axe de rotation r de l'hélice.

Cette incidence, correspondant à une distribution non homogène de flux d'air sur les pales, entraîne une dissymétrie de la portance et de la traînée des pales, ce qui engendre une poussée dissymétrique des pales. La poussée comprend alors une composante longitudinale, mais également une composante transversale correspondant à des efforts parasites latéraux et verticaux, c'est-à-dire dirigés dans un plan normal perpendiculaire à l'axe longitudinal.

Outre la perte de poussée occasionnée, ces efforts parasites engendrent des moments parasites, appelés « moment 1P » dans le milieu aéronautique, appliqués sur les pales.

Le moment 1P est dimensionnant pour la masse de la structure des pales de la turbomachine et de l'ensemble des pièces assurant la fixation de l'hélice à l'aéronef. En effet, la masse de ces pièces est dimensionnée de sorte à assurer leur résistance au moment 1P : une augmentation du moment 1P entraîne donc une augmentation de la masse de ces pièces. Par ailleurs, un moment 1P important est susceptible d'augmenter l'usure et ainsi de réduire la durée de vie de l'hélice et des pièces assurant la fixation du moteur sur l'aéronef, ce qui oblige à effectuer davantage d'opérations de maintenance et de renouvellement des pièces.

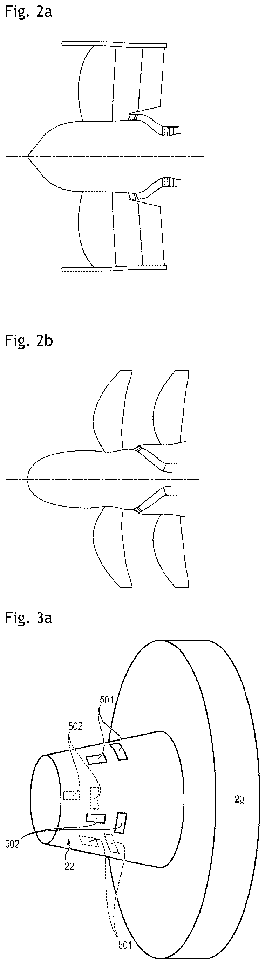

Le moment 1P dû à un flux d'air non homogène a un impact pour les architectures carénées telles que les turbofans, malgré un certain redressement du flux par la nacelle. Ce phénomène est notamment présent pour les turbofans à fort taux de dilution, qui présentent donc un très grand diamètre d'hélice de soufflante. Un turbofan caréné est par exemple illustré en figure 2a.

Le moment 1P est particulièrement dimensionnant pour les architectures non carénées, par exemple les turbopropulseurs, ou les open rotors qui permettent une augmentation du taux de dilution par rapport aux turbofans classiques. Un open rotor est illustré à titre d'exemple en figure 2b. Pour ces architectures non carénées, le moment 1P est très dimensionnant pour la structure de l'hélice ainsi que pour l'optimisation de son fonctionnement.

Le moment 1P est également dimensionnant pour les moteurs enterrés, une dissymétrie étant susceptible d'apparaître entre la partie masquée et la partie libre de l'hélice.

Le calage des pales de l'hélice peut être réglé de sorte à réduire le moment 1P en redirigeant la poussée dans la direction longitudinale. Le calage d'une pale correspond à l'angle formé entre d'une part un axe reliant le bord d'attaque au bord de fuite de la pale, et d'autre part l'axe de rotation de l'hélice.

On connaît des systèmes de commande du calage collectif de pale, capables de modifier le calage de l'ensemble des pales de manière identique. Les pales présentent alors toutes le même calage. Notamment, un vérin peut entraîner un déplacement longitudinal d'un disque articulé par rapport aux pales par le biais de bielles, le déplacement longitudinal du disque entraînant une modification collective du calage des pales. Néanmoins, ces systèmes ne permettent pas de réduire le moment 1P résultant d'une distribution non homogène du flux d'air sur les pales. Ces systèmes sont donc adaptés aux phases de vol à altitude stabilisée sans vent de travers, mais non aux phases de manoeuvre, d'incidence ou de vent de travers.

Des systèmes de commande du calage cyclique des pales son également connus de l'art antérieur. Ces systèmes sont capables d'imposer à chaque pale un calage qui varie de manière cyclique en fonction de sa position angulaire lors de sa rotation autour de l'axe de rotation, chaque pale ayant un calage qui lui est propre. Le calage est adapté pour contrer le moment 1P pour produire une poussée longitudinale en optimisant le calage de la pale à l'écoulement entrant.

De tels systèmes existent en particulier dans le domaine des hélicoptères. Néanmoins, ces systèmes ne sont pas adaptés aux contraintes, aux besoins et aux architectures rencontrées dans d'autres aéronefs, tels que les avions.

Un système de commande du calage cyclique des pales d'une hélice est décrit dans le document FR 2 996 591. Les pales sont fixées sur deux disques montés en rotation avec le moyeu de l'hélice. Quatre vérins permettent d'incliner l'un des disques par rapport à l'autre, ce qui entraîne un calage cyclique des pales. Néanmoins, les pales sont directement fixées aux deux disques au niveau de points d'accrochage, et les deux disques sont solidaires en rotation de l'hélice, ce qui contraint fortement le positionnement du dispositif. Par ailleurs, le système de commande décrit ne permet pas de régulation active du calage cyclique des pales en fonction des efforts rencontrés par l'avion au cours du vol.

Un système d'adaptation passive du calage cyclique des pales d'une hélice non carénée est décrit dans la demande de brevet français FR 3 067 415 A1. Dans ce système, des bielles sont fixées d'une part aux pales et d'autre part à un disque inclinable. Un flux d'air non longitudinal crée sur les pales une force tendant à modifier leur calage, les bielles appliquant à leur tour une force sur le disque qui tend à modifier l'inclinaison du disque jusqu'à une position où les efforts dans le plan normal s'annulent. Néanmoins, ce système ne permet pas de commande active du calage cyclique des pales et ne permet pas non plus d'adapter la sensibilité de la modification du calage des pales en fonction des efforts dans le plan normal.

Enfin, un système de commande du calage cyclique des pales d'une hélice non carénée est décrit dans le document FR 2 997 138. Au moins trois vérins modifient l'inclinaison d'une pièce qui est articulée par rapport aux pales, de sorte que le déplacement des vérins engendre une modification cyclique du calage des pales. Le calage des pales est déterminé par des simulations préalables de sorte à réduire les pertes causées par des obstacles, tels qu'une aile ou un fuselage, ces obstacles étant connus à l'avance. Néanmoins, ce système nécessite la connaissance et la simulation préalables des inhomogénéités de flux, et ne permet pas une adaptation en temps réel du calage des pales en fonction des phases rencontrées par l'avion au cours du vol et de l'évolution des inhomogénéités de flux.

### EXPOSE DE L'INVENTION

Un but de l'invention est de proposer un système de commande de calage cyclique des pales permettant de réduire les efforts et moments parasites engendrés sur les pales du fait d'une distribution non homogène du flux d'air sur les pales.

Un autre but de l'invention est de proposer un système de de commande de calage cyclique des pales adapté pour être implémenté sur une hélice carénée ou sur une hélice non carénée d'une turbomachine.

Un autre but de l'invention est de proposer un système de de commande de calage cyclique des pales qui permette d'ajuster le calage des pales en temps réel au cours du vol.

Selon un premier aspect, l'invention concerne un système de commande de calage cyclique des pales d'une hélice d'une turbomachine, l'hélice comprenant un ensemble de pales mobiles en rotation autour d'un axe de rotation par rapport à un repère stator de la turbomachine, les pales étant disposées dans un plan normal à l'axe de rotation de l'hélice, appelé plan normal, le système étant tel qu'il comprend :
- un ensemble de plateau inclinable par rapport au plan normal,
- un système d'articulation articulant l'ensemble de plateau par rapport aux pales de sorte qu'une inclinaison de l'ensemble de plateau entraine une modification cyclique du calage des pales,
et tel qu'il comprend :
- un capteur d'efforts monté fixe dans le repère stator, le capteur d'efforts étant adapté pour mesurer un effort exercé dans le plan normal par un flux d'air en entrée des pales de l'hélice,
- un vérin adapté pour incliner l'ensemble de plateau, le vérin étant adapté pour être actionné en réponse à un effort mesuré par le capteur d'efforts.

Certaines caractéristiques préférées mais non limitatives du système de commande de calage cyclique décrit ci-dessus sont les suivantes, prises individuellement ou en combinaison :
- le capteur d'efforts comprend une jauge de contrainte et est adapté pour être positionné au niveau d'un support palier d'un carter intermédiaire de la turbomachine ;
- le système comprend un premier jeu de capteurs d'efforts adapté pour mesurer un effort dans une première direction du plan normal et un deuxième jeu de capteurs d'efforts adapté pour mesurer un effort dans une deuxième direction du plan normal, la deuxième direction étant perpendiculaire à la première direction, le système comprenant en outre un premier vérin adapté pour être actionné en réponse à un effort mesuré par le premier jeu de capteurs d'efforts, et un deuxième vérin adapté pour être actionné en réponse à un effort mesuré par le deuxième jeu de capteurs d'efforts ;
- l'ensemble de plateau comprend un plateau interne monté fixe dans le repère stator et un plateau externe monté mobile en rotation autour de l'axe de rotation de l'hélice, le plateau interne et le plateau externe étant séparés l'un de l'autre par le biais d'un palier à roulement de sorte que le plateau interne et le plateau externe sont indépendants en rotation autour de l'axe de rotation et sont solidaires en inclinaison par rapport au plan normal, dans lequel le vérin est actionné de sorte à modifier l'inclinaison du plateau interne, et le système d'articulation articule le plateau externe par rapport aux pales ;
- le système comprend en outre une rotule comprenant une surface externe bombée, l'ensemble de plateau comprend une surface interne de forme complémentaire de la surface externe de la rotule et positionnée au contact de la surface externe de la rotule, de sorte que la surface externe de la rotule guide un déplacement en inclinaison de l'ensemble de plateau ;
- le système d'articulation comporte un ensemble de bielles, chaque bielle étant articulée en une première extrémité sur une pale associée par le biais d'une liaison pivot, et en une deuxième extrémité sur l'ensemble de plateau, les bielles étant montées mobiles en rotation autour de l'axe de rotation de l'hélice, de sorte qu'une inclinaison de l'ensemble de plateau entraîne un déplacement correspondant des bielles propre à modifier de manière cyclique le calage des pales ;
- le système comprend en outre une unité de commande adaptée pour générer un signal de commande du calage des pales à partir d'une comparaison entre un signal de mesure issu du capteur d'efforts et un signal de consigne prédéterminé, le signal de commande étant adapté pour actionner le vérin lorsque le signal de mesure diffère du signal de consigne Scons d'une différence prédéterminée pendant une durée prédéterminée ;
- le système comprend en outre un système de commande du calage collectif des pales configuré pour déplacer l'ensemble de plateau en translation selon la direction longitudinale tout en conservant une même inclinaison de l'ensemble de plateau, de sorte à modifier le calage de chacune des pales de manière identique, le calage collectif des pales étant indépendant d'un calage cyclique des pales ;

Selon un deuxième aspect, l'invention concerne une turbomachine comprenant un système de commande de calage cyclique des pales d'une hélice selon le premier aspect.

Selon un troisième aspect, l'invention concerne un aéronef comprenant un système de commande de calage cyclique des pales d'une hélice de turbomachine selon le premier aspect.

### DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :
La figure 1a, déjà commentée, représente une vue schématique d'un aéronef lors d'une phase de vol stabilisé, le flux d'air en entrée des pales de l'hélice présentant une composante longitudinale.
La figure 1b, déjà commentée, représente une vue schématique d'un aéronef lors d'une phase de montée, le flux d'air en entrée des pales de l'hélice présentant une composante longitudinale et une composante transversale.
Les figures 2a et 2b, déjà commentées, représentent des vues schématiques d'une hélice respectivement d'un open rotor et d'un turbofan caréné.
La figure 3a représente une vue schématique en perspective d'un support palier d'un système de commande de calage cyclique de pales selon un mode de réalisation de l'invention.
Les figures 3b et 3c représentent des vues schématiques, respectivement partielle en perspective et de face, d'un système de commande de calage cyclique de pales selon un mode de réalisation de l'invention.
Les figures 4a et 4b représentent des vues schématiques, respectivement de côté et de face, d'un système de commande de calage cyclique de pales conforme à un mode de réalisation de l'invention, l'ensemble de plateau étant non incliné.
Les figure 5a et 5b représentent des vues schématiques, respectivement de côté et de face, d'un système de commande de calage cyclique de pales conforme à un mode de réalisation de l'invention, l'ensemble de plateau étant incliné.
La figure 5c représente un diagramme illustrant une variation cyclique du calage d'une pale de l'ensemble illustré en figures 5a et 5b lors d'une rotation complète de l'hélice.
Les figures 6 et 7 représentent des vues schématiques de côté respectivement pour un premier et un second azimut du moteur d'un système de commande de calage cyclique de pales conforme à un mode de réalisation de l'invention.
La figure 8 représente un schéma illustrant l'expression d'un effort dans le plan normal, pour des systèmes de commande de calage cyclique de pales comprenant deux ou trois vérins, et conformes à un mode de réalisation de l'invention.
La figure 9 représente un schéma illustrant des vérins et un plateau d'un système de commande de calage cyclique de pales conforme à un mode de réalisation de l'invention.
La figure 10 représente un diagramme illustrant la génération d'un signal de commande d'un système de commande de calage cyclique de pales conforme à un mode de réalisation de l'invention.

### DESCRIPTION DETAILLEE DE L'INVENTION

### Notions préliminaires

Dans la présente demande, le terme hélice est utilisé par exemple pour désigner une hélice de soufflante de turbofan, une hélice de turbopropulseur, ou encore une hélice d'open rotor.

Un axe de rotation de l'hélice est appelé axe longitudinal r. Un repère stator est un repère dans lequel les pales 1 de l'hélice sont en rotation lors du fonctionnement de la turbomachine. Un repère rotor est un repère dans lequel les pales 1 de l'hélice sont fixes lors du fonctionnement de la turbomachine.

Les termes interne et externe, respectivement, sont définis de sorte que la partie ou la face interne d'un élément est plus proche de l'axe longitudinal r que la partie ou la face externe du même élément.

### Présentation générale du système de commande de calage cyclique de pales 1

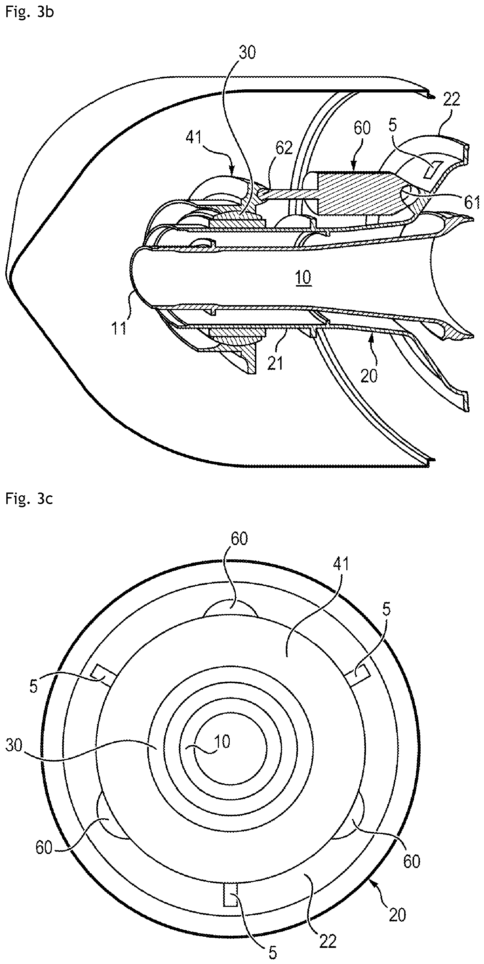

Un système de commande de calage cyclique de pales 1 d'une hélice d'une turbomachine, illustré à titre d'exemple en figures 3 à 7, comprend un ensemble de pales 1 mobiles en rotation autour d'un axe de rotation r par rapport à un repère stator de la turbomachine, les pales 1 étant disposées dans un plan normal P à l'axe de rotation r de l'hélice, appelé plan normal P, le système étant caractérisé en ce qu'il comprend :
- un ensemble de plateau 40 inclinable par rapport au plan normal P,
- un système d'articulation 50 articulant l'ensemble de plateau 40 par rapport aux pales 1 de sorte qu'une inclinaison de l'ensemble de plateau 40 entraine une modification cyclique du calage des pales 1,
et en ce qu'il comprend :
- un capteur d'efforts 5 monté fixe dans le repère stator, le capteur d'efforts 5 étant adapté pour mesurer un effort exercé dans le plan normal P par un flux d'air en entrée des pales 1 de l'hélice,
- un vérin 60 adapté pour incliner l'ensemble de plateau 40, le vérin 60 étant adapté pour être actionné en réponse à un effort mesuré par le capteur d'efforts 5.

Ce système de commande de calage cyclique de pales peut être appliqué à des turbomachines à architectures carénées, telles que des turbofans à fort taux de dilution, ou non carénées, telles que des open rotors ou des turbopropulseurs.

Le capteur d'efforts 5 permet de mesurer un effort exercé dans le plan normal P par un flux d'air présentant une incidence par rapport à l'axe de rotation r des pales 1, le flux d'air comprenant une composante longitudinale et une composante normale par rapport à l'axe de rotation r.

Le capteur d'efforts 5 peut mesurer les efforts en continu pendant le fonctionnement de l'hélice. Les efforts sont donc mesurés en temps réel au cours du vol, indépendamment de toute connaissance préalable du calage des pales 1 ou des caractéristiques de vol de l'aéronef. Ainsi, le système permet une adaptation du calage des pales 1 en temps réel en fonction des variations de la mesure d'efforts au cours du vol, quel que soit le type de phase, prédictible ou non prédictible. De plus, l'adaptation du calage des pales est effectuée à partir d'une mesure d'efforts, donc sans se baser sur des données avions telles que l'assiette de l'avion ou son attitude. Ainsi, le système respecte les normes réglementaires, sa sécurité est accrue et ne dépend pas de données avion, et le système n'interfère pas avec la pilotabilité de l'avion.

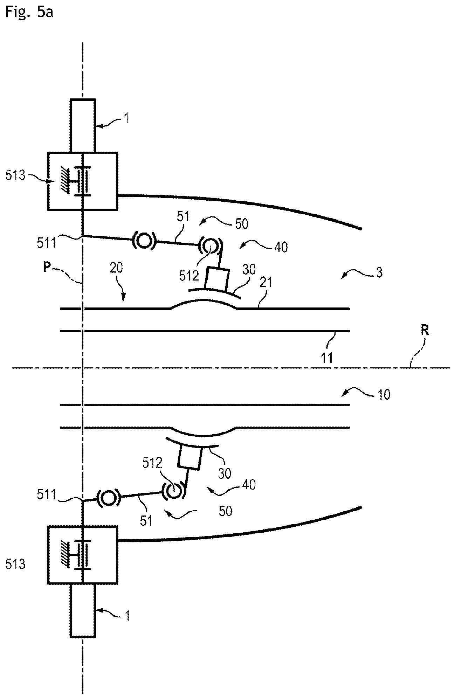

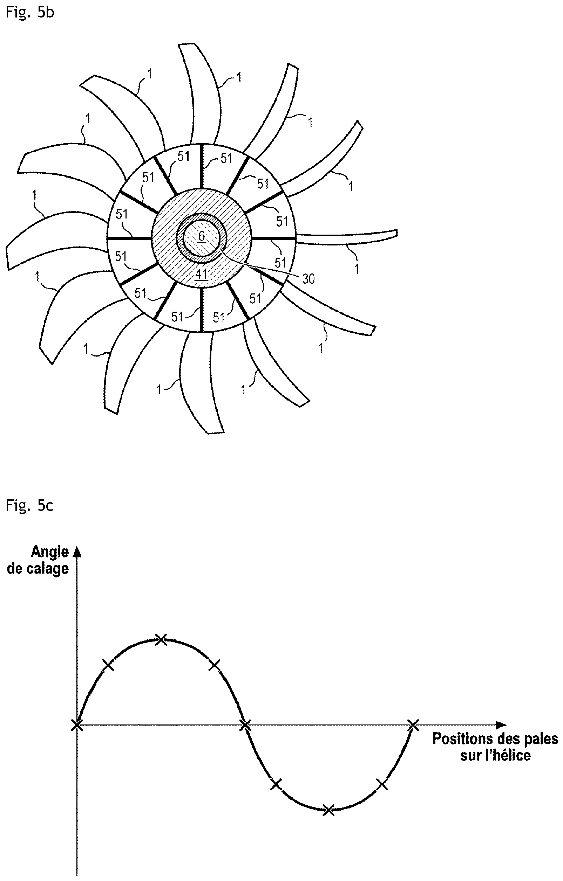

Le système de commande de calage cyclique de pales 1 permet, via l'inclinaison de l'ensemble de plateau 40, d'imposer à chaque pale 1 un calage spécifique. Le calage d'une pale 1 est modifié périodiquement au cours de la rotation de la pale 1, selon un profil qui peut être de type sinusoïdal, ainsi qu'illustré à titre d'exemple en figure 5c. La figure 5b illustre un exemple de configuration dans laquelle le calage des pales est cyclique. Plus l'ensemble de plateau 40 est incliné, plus l'amplitude de la variation du calage d'une pale 1 lors de sa rotation est importante. Le système de commande permet donc d'imposer aux pales 1 un calage cyclique.

Le vérin 60 du système de commande de calage cyclique de pales 1 est actionné en réponse à l'effort mesuré, ce qui permet d'ajuster le calage des pales 1 en inclinant l'ensemble de plateau 40 en fonction de l'effort exercé dans le plan normal P. Notamment, le calage des pales 1 peut être adapté de sorte à équilibrer les forces exercées par le flux d'air sur les pales 1 afin d'aboutir à une poussée longitudinale et à une réduction, voire une annulation, des efforts parasites exercés dans le plan normal P.

En particulier, un flux d'air qui n'est pas dirigé uniquement dans la direction longitudinale, c'est-à-dire un flux d'air comprenant une composante longitudinale dirigée selon l'axe de rotation r, et une composante normale dirigée dans le plan normal P, est susceptible d'engendrer sur les pales 1 des efforts dans le plan normal P.

Le système de commande de calage cyclique de pales permet de réduire, voire d'annuler, les efforts exercés sur les pales 1 dans le plan normal P du fait d'une distribution de flux d'air non homogène, c'est-à-dire lorsque le flux d'air présente une incidence par rapport au plan normal P. Cela permet d'assurer une trainée et une poussée symétrique sur les pales 1 de l'hélice. Ainsi, le moment aérodynamique engendré sur les pales 1 de l'hélice par le flux d'air non homogène (moment 1P) peut être réduit, voire annulé, en temps réel et en permanence. En d'autres termes, le système permet d'aligner la poussée de l'hélice avec l'axe longitudinal r de la turbomachine en annulant les efforts et moments parasites dans le plan normal P à l'axe de rotation r des pales 1 de l'hélice.

En réduisant, voire en annulant, le moment 1P supporté par les pales 1 de la turbomachine au cours du vol, le système de commande du calage cyclique de pales 1 permet une réduction de la masse des structures portant le moment 1P, telles que les pales 1 ou encore les pièces assurant la fixation de l'hélice à l'aéronef, et donc une réduction également les chargements induits par cette masse. Le système permet également une diminution de l'usure des pales 1 et des pièces assurant la fixation de l'hélice à l'aéronef, le nombre et le coût des opérations de maintenance associées étant également réduits.

### Structure de la turbomachine

La turbomachine peut comprendre un carter intermédiaire fixe dans le repère stator de la turbomachine, le carter intermédiaire n'étant pas entraîné en rotation autour de l'axe de rotation r de l'hélice avec les pales 1.

Le carter intermédiaire de la turbomachine peut comporter un support palier 20. Le support palier 20 est par conséquent une pièce fixe dans le repère stator.

Dans le cas d'un turbofan avec une soufflante, le carter intermédiaire peut présenter une partie de carter de soufflante et une partie de carter de compresseur basse pression. Le système d'adaptation du calage des pales 1 est positionné sensiblement au niveau du carter de soufflante.

La turbomachine peut comporter un arbre rotor 10 qui est lié en rotation avec les pales 1 de l'hélice. L'arbre rotor 10 peut être articulé par rapport au support palier 20 par le biais d'un ou de plusieurs palier(s) à roulement 15, 16. Ainsi, l'arbre rotor 10 est entraîné en rotation autour de l'axe longitudinal r lors du fonctionnement de l'hélice, tandis que le support palier 20 n'est pas entraîné en rotation autour de l'axe longitudinal r lors du fonctionnement de l'hélice, le support palier 20 étant fixe dans le repère stator.

L'arbre rotor 10 peut présenter une partie interne 11, une partie externe 12 et une partie de liaison 13 reliant la partie interne 11 et la partie externe 12. La partie interne 11 et la partie externe 12 de l'arbre rotor 10 sont sensiblement cylindriques autour de l'axe de rotation r de l'hélice. La partie externe 12 est disposée en une position plus externe que la partie interne 11 par rapport à l'axe de rotation r.

La partie externe 12 est solidaire en rotation des pales 1 de l'hélice, et mobile en rotation par rapport au carter intermédiaire par le biais d'un ou de plusieurs palier(s) à roulement 15. La partie interne 11 est mobile en rotation par rapport au carter intermédiaire par le biais d'un ou de plusieurs palier(s) à roulement 16. La partie interne 11 de l'arbre rotor 10 peut être liée en rotation à un arbre de turbine basse pression 18 par le biais d'un réducteur.

Le support palier 20 peut être un support annulaire disposé entre la partie interne 11 et la partie externe 12 de l'arbre rotor 10. Le support palier 20 peut être centré sur l'axe de rotation r et être mobile en rotation autour de l'axe de rotation r lors du fonctionnement de l'hélice.

Le support palier 20 peut présenter une partie sensiblement cylindrique 21 disposée autour de la partie interne 11 de l'arbre rotor 10, et une partie tronconique 22 reliée d'une part à la partie sensiblement cylindrique 21 et d'autre part au carter intermédiaire, par exemple au niveau d'un compresseur basse pression.

### Capteur d'efforts 5

Le capteur d'efforts 5 peut être une jauge de contrainte. Une jauge de contrainte présente une bonne fiabilité à des conditions d'opération extrêmes, peut être intégrée dans des environnements contraints et présente une durée de vie satisfaisante.

En variante, le capteur d'efforts 5 peut être, pour des architectures carénées, un capteur de proximité placé sur le carénage et mesurant la déformation des pales 1. En variante, le capteur d'efforts 5 peut être un capteur de pression par peignes mesurant le champ aérodynamique de pression à proximité du capteur.

Le capteur d'efforts 5 est monté fixe dans le repère stator, c'est-à-dire que le capteur d'efforts 5 n'est pas entraîné en rotation lors du fonctionnement de l'hélice. L'installation du capteur d'efforts 5 est ainsi facilitée, le nombre et la disposition des capteurs d'efforts 5 est moins contraint et la fiabilité de la mesure est améliorée par rapport à un capteur qui serait par exemple installé directement sur les pales 1 ou d'autres pièces tournantes.

Le capteur d'efforts 5 peut notamment être monté sur une pièce fixe dans le repère stator et mesurer un effort exercé dans le plan normal P sur cette pièce. Un tel effort est représentatif d'un effort exercé dans le plan normal P par un flux d'air en entrée des pales 1 de l'hélice, lorsque le flux d'air comprend à la fois une composante longitudinale et une composante perpendiculaire à la direction longitudinale.

Le capteur d'efforts 5 peut être adapté pour être positionné au niveau d'un support palier 20 d'un carter intermédiaire de la turbomachine. En particulier, le capteur d'efforts 5 peut être disposé au niveau de la partie tronconique 22 du support palier 20.

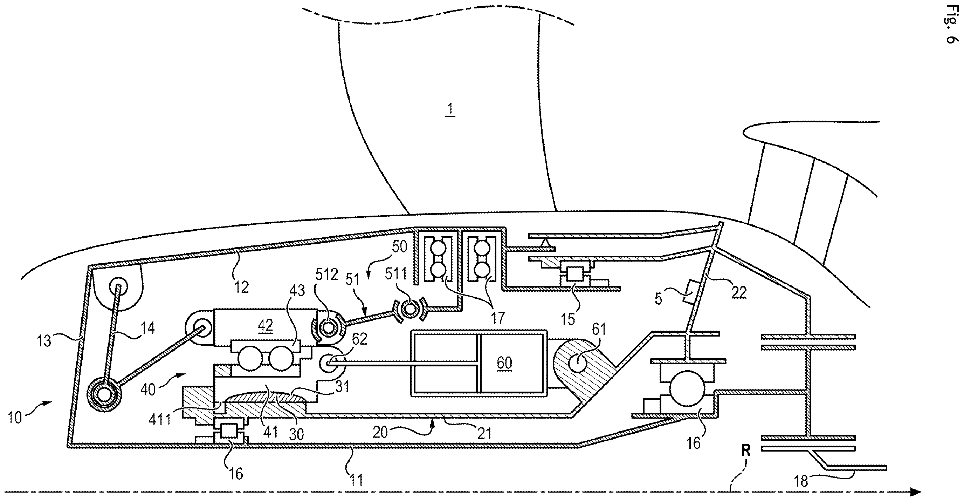

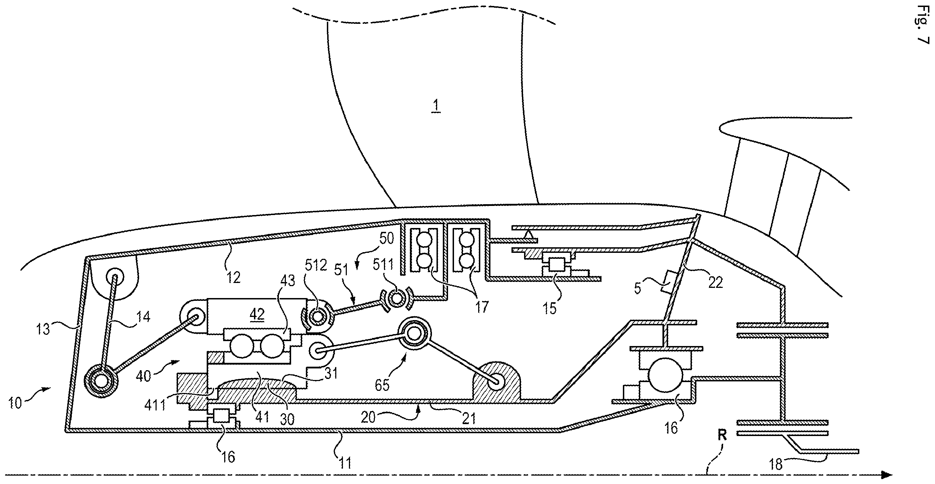

Les efforts exercés sur les pales 1 de l'hélice lors de leur rotation sont transmis au support palier 20 par le biais d'un ou plusieurs palier(s) à roulement 16 disposé(s) entre l'arbre rotor 10 et le support palier 20, par exemple entre la partie interne 11 de l'arbre rotor 10 et le support palier 20. Ainsi, un effort mesuré sur le support palier 20 est représentatif d'un effort exercé sur les pales 1 de l'hélice. Le(s) palier(s) 16 transmet(tent) la flexion au carter intermédiaire, et cette flexion peut être capturée par le capteur d'efforts 5 et traduite en une sollicitation latérale de l'hélice. A titre d'exemple non limitatif, les figures 6 et 7 illustrent deux paliers à roulement 16, l'un étant situé à proximité de l'ensemble de plateau 40, l'autre étant situé à proximité de la partie tronconique 22 du support palier 20.

Lorsque la poussée n'est pas dirigée uniquement selon la direction longitudinale, l'effort engendré sur les pales 1, donc sur le support palier 20, n'est pas homogène sur toute la circonférence du support palier 20, ce qui entraîne une déformation du support palier 20. Le capteur d'efforts 5 mesure la déformation du support palier 20, qui est représentative des efforts exercés sur les pales 1 de l'hélice. En particulier, la déformation du support palier 20 peut être une déformation en flexion dirigée dans une direction correspondant à une direction, dans le plan normal P, des efforts parasites exercés sur les pales 1.

Le capteur d'efforts 5 peut être collé sur une face du support palier 20. En variante, un creux peut être ménagé dans le support palier 20 et le capteur d'efforts 5 peut être incrusté dans ce creux. En variante, le capteur d'efforts 5 peut être soudé sur le support palier 20, ou fixé au support palier 20 par tout autre moyen envisageable.

Le capteur d'efforts 5 peut mesurer la déformation du support palier 20 dans une direction de mesure, la déformation étant représentative de l'effort parasite exercé sur les pales 1 dans la direction de mesure.

Le capteur d'efforts 5 peut être calibré afin d'établir une fonction reliant un effort mesuré dans la direction de mesure et un signal électrique de mesure émis par le capteur d'efforts 5. Pour effectuer cette calibration, le support palier 20 est chargé dans la direction de mesure du capteur d'efforts 5, par exemple par le biais d'un vérin 60 ou d'une masse. Le capteur d'efforts 5 est alimenté pour obtenir la variation de tension souhaitée en sortie du capteur pour une valeur déterminée d'effort dans la direction de mesure. La calibration peut être répétée pour plusieurs valeurs d'efforts dans la direction de mesure.

La calibration permet d'obtenir une fonction d'effort reliant l'effort dans la direction de mesure à la tension en sortie du capteur d'efforts 5, c'est-à-dire au signal de mesure Sm. L'effort E exercé sur le support palier 20 peut alors être relié à la tension V en sortie du capteur d'efforts 5 via la fonction d'effort f par la relation suivante : E = f(V).

Le système de commande du calage cyclique de pales 1 peut comprendre un ou plusieurs capteurs d'efforts 5, agencé(s) en un ou plusieurs jeux de capteurs d'efforts 501, 502. Un système comprenant plusieurs capteurs d'efforts 5 offre une précision de mesure améliorée, une réduction d'éventuelles imprécisions, erreurs ou biais de mesure, ainsi qu'une correction de phénomènes parasites différents du phénomène à observer.

Chaque jeu d'un ou plusieurs capteurs d'efforts 501, 502 peut mesurer une déformation du support palier 20 dans une direction de mesure du plan normal P par rapport à l'axe de l'hélice, la déformation étant représentative de la composante de l'effort parasite exercé sur les pales 1 dans la direction de mesure.

Quand le système comprend plusieurs jeux de capteurs d'efforts 501, 502 avec des directions de mesure différentes, la calibration peut être répétée pour chaque direction de mesure.

A titre d'exemple, le système de commande du calage cyclique de pales 1 peut comprendre deux jeux de capteurs d'efforts 501, 502 comprenant chacun un ou plusieurs capteurs d'efforts 5. Un premier jeu de capteurs d'efforts 501 est adapté pour mesurer un effort dans une première direction du plan normal P, et un deuxième jeu de capteur d'efforts 502 est adapté pour mesurer un effort dans une deuxième direction du plan normal P.

La deuxième direction peut être perpendiculaire à la première direction. En variante, la deuxième direction être une direction différente de la première direction, sans être perpendiculaire à la première direction.

Le système peut comprendre en outre un premier vérin 60 adapté pour être actionné en réponse à un effort mesuré par le premier jeu de capteur d'efforts 501, et un deuxième vérin 60 adapté pour être actionné en réponse à un effort mesuré par le deuxième jeu de capteur d'efforts 502.

Ainsi, quel que soit l'effort exercé dans le plan normal P à l'axe de rotation r de l'hélice, les deux jeux de capteurs d'efforts 501, 502 mesurent les efforts exercés sur le support palier 20 dans les deux directions de mesure. Ces efforts étant représentatifs des efforts exercés dans le plan normal P sur les pales 1 de l'hélice, une telle disposition de jeux de capteurs d'efforts 501, 502 permet d'adapter le calage des pales 1 de l'hélice par le biais des deux vérins 60 en réponse aux efforts mesurés dans le plan normal P.

La figure 3a illustre un exemple de réalisation dans lequel le système de calage de pales 1 comprend deux jeux de capteurs d'efforts 501, 502. Chaque jeu de capteurs d'efforts 501, 502 comprend quatre jauges de contrainte unidirectionnelles à résistances variables agencées pour former un pont de Wheatstone. Les quatre jauges de contrainte sont disposées deux à deux sur le support palier 20 en deux couples de deux jauges de contrainte diamétralement opposée par rapport au support palier 20 dans la direction de mesure. Les quatre jauges 501 sont disposées deux à deux à 6h et 12h et capturent la flexion suivant la verticale. Les quatre jauges 502 sont disposées deux à deux à 3h et 9h et capturent la flexion suivant l'horizontale. Chaque couple comprend une première jauge disposée dans la direction axiale qui capture la flexion, un jeu de deux couples permettant de rejeter les erreurs ou biais dans la flexion axiale. Chaque couple comprend une deuxième jauge disposée perpendiculairement à la première jauge, qui permet de rejeter la torsion et le gonflement du carter qui est lié à l'effet thermique. Un tel agencement de capteurs d'efforts 5 en pont de Wheatstone permet d'éliminer des biais de mesure dus par exemple aux conditions de l'environnement dans lequel les capteurs d'efforts 5 sont situés, par exemple les biais dus à la torsion et à la température. Les ponts de jauges de contraintes permettent de rejeter des torsions et/ou efforts axiaux mesurés sur certains des capteurs 5 et non sur d'autres, d'éliminer les imprécisions, erreurs ou biais de mesure, et de corriger les phénomènes parasites différents du phénomène à observer.

La figure 3c illustre un exemple de réalisation dans lequel le système de calage de pales 1 comprend trois jeux de deux capteurs d'effrots 5, disposés à 120° les uns des autres sur le support palier 20. Chaque jeu mesure un effort dans la direction de mesure, un jeu de capteurs d'efforts 5 étant utile à la fois à la détermination de l'effort vertical et de l'effort horizontal. Une telle disposition des capteurs d'effort 5 permet de mutualiser leurs fonctions et donc d'utiliser un nombre plus faible de capteurs d'efforts 5.

Le système peut en outre comprendre des jauges de contrainte supplémentaires, afin d'améliorer la réjection de phénomènes parasitiques, tels que l'exclusion de biais de mesure de température. En outre, les jeux de capteurs d'efforts peuvent être redondés, ou encore ségrégués, pour améliorer la fiabilité de la mesure.

### Ensemble de plateau 40

L'ensemble de plateau 40, illustré à titre d'exemple non limitatif en figures 6 et 7, est inclinable par rapport au plan normal P à l'axe de rotation r de l'hélice. En d'autres termes, l'ensemble de plateau 40 peut être déplacé pour former un angle non nul avec le plan formé par les pales 1 de l'hélice. Une modification de l'inclinaison de l'ensemble de plateau 40 entraîne une modification du calage des pales 1, par le biais du système d'articulation 50.

L'ensemble de plateau 40 peut être annulaire et présenter une symétrie de rotation autour de l'axe de rotation r. Ainsi, une inclinaison de l'ensemble de plateau 40 par rapport au plan normal P entraîne un déplacement opposé et d'ampleur identique de deux points diamétralement opposés de l'ensemble de plateau 40.

L'ensemble de plateau 40 peut comprendre un plateau interne 41 et un plateau externe 42. Le plateau interne 41 et le plateau externe 42 sont indépendants en rotation autour de l'axe de rotation r de l'hélice et sont solidaires en inclinaison par rapport au plan normal P.

Le plateau interne 41 et le plateau externe 42 peuvent être annulaires et centrés autour de l'axe de rotation r de l'hélice. Le plateau externe 42 est situé en une position plus éloignée de l'axe de rotation r de l'hélice que le plateau interne 41.

Le plateau interne 41 est monté fixe dans le repère stator, c'est-à-dire qu'il n'est pas entraîné en rotation autour de l'axe de rotation r de l'hélice. Le plateau externe 42 est monté mobile en rotation autour de l'axe de rotation r de l'hélice, et est entraîné en rotation autour de l'axe de rotation r de l'hélice lors du fonctionnement de l'hélice, le plateau externe 42 suivant la rotation des pales 1.

Le plateau interne 41 et le plateau externe 42 peuvent être séparés l'un de l'autre par le biais d'un palier 43 de sorte que le plateau interne 41 et le plateau externe 42 sont indépendants en rotation autour de l'axe de rotation r et sont solidaires en inclinaison par rapport au plan normal P. Le palier 43 peut être mis en place entre le plateau interne 41 et le plateau externe 42, en particulier au niveau de dégagements formés dans chacun des plateaux annulaires interne 41 et externe 42. Le palier 43 est un palier à roulement, et peut être un palier double billes à contact oblique opposées. Grâce au palier à roulement 43, lorsque le plateau externe 42 est entraîné en rotation autour de l'axe de rotation r de l'hélice lors du fonctionnement de l'hélice, le plateau interne 41 n'est pas entraîné en rotation autour de l'axe de rotation r de l'hélice et reste fixe dans le repère stator. En revanche, une inclinaison du plateau interne 41 par rapport au plan normal P entraîne une inclinaison correspondante du plateau externe 42 par rapport au plan normal P.

Le plateau interne 41 peut présenter une forme sensiblement cylindrique autour de l'axe de rotation r lorsque l'ensemble de plateau 40 n'est pas incliné. Ainsi, pour une inclinaison nulle de l'ensemble de plateau 40, la course d'un vérin 60 disposé selon une direction sensiblement longitudinale entre la partie tronconique 22 du support palier 20 et le plateau interne 41 est sensiblement identique quelle que soit la position du vérin 60 autour de l'axe de rotation r.

Le plateau externe 42 peut présenter une forme sensiblement cylindrique autour de l'axe de rotation r et un pourtour externe sensiblement circulaire autour de l'axe de rotation r lorsque l'ensemble de plateau 40 n'est pas incliné. Ainsi, pour une inclinaison nulle de l'ensemble de plateau 40, une distance entre l'ensemble de plateau 40 et une pale 1 est identique.

Le support palier 20 du carter intermédiaire peut être situé entre la partie interne 11 de l'arbre rotor 10 et le plateau interne 41 de l'ensemble de plateau 40.

L'arbre rotor 10 peut être articulé, par exemple au niveau de sa partie externe 12, sur le plateau externe 42 par le biais d'un compas tournant 14, et être articulé par rapport au système d'articulation 50 au niveau de la jonction avec les pales 1 par le biais d'un ou de plusieurs palier(s) à roulement 17.

Lors du fonctionnement de l'hélice, le support palier 20 sur lequel est monté le capteur d'efforts 5, ainsi que le plateau interne 41, ne sont pas entraînés en rotation autour de l'axe de rotation r de l'hélice. En revanche, l'arbre rotor 10, le plateau externe 42, le système d'articulation 50 et les pales 1 sont entraînés en rotation autour de l'axe de rotation r, ces pièces étant solidaires en rotation.

Le vérin 60 peut être actionné de sorte à modifier l'inclinaison du plateau interne 41, et le système d'articulation 50 peut articuler le plateau externe 42 par rapport aux pales 1. Ainsi, un actionnement du vérin 60 en réponse à un effort mesuré par le capteur d'efforts 5 entraîne une modification de l'inclinaison du plateau interne 41, qui entraîne une modification correspondante de l'inclinaison du plateau externe 42, le plateau interne 41 et le plateau externe 42 étant solidaires en inclinaison, qui entraîne une modification du calage des pales 1.

Le système peut comprendre en outre une rotule 30. La rotule 30 peut être annulaire autour de l'axe de rotation r et comprendre une surface externe 31. La rotule annulaire 30 peut être disposée entre l'arbre rotor 10 et l'ensemble de plateau 40, plus précisément entre le support palier 20 et le plateau interne 41.

L'ensemble de plateau 40, en particulier le plateau interne 41, peut comprendre une surface interne 411 de forme complémentaire de la surface externe 31 de la rotule 30 et positionnée au contact de la rotule 30, de sorte que la surface externe 31 de la rotule 30 guide un déplacement en inclinaison de l'ensemble de plateau 40.

La surface interne 411 du plateau interne 41 peut présenter une forme complémentaire de la surface externe 31 de la rotule 30 et être positionnée au contact de la surface externe 31 de la rotule 30.

La rotule 30 peut notamment présenter une surface externe 31 bombée. Ainsi, un actionnement du vérin 60 entraîne un déplacement en inclinaison de l'ensemble de plateau 40 par le bais d'un glissement de l'ensemble de plateau 40 au contact de la surface externe 31 bombée de la rotule 30. La forme plus ou moins bombée de la surface externe 31 de la rotule 30 peut entraîner une inclinaison plus ou moins forte de l'ensemble de plateau 40 pour un même déplacement du vérin 60, et donc une modification plus ou moins importante du calage des pales 1 pour un déplacement du vérin 60 donné.

En variante, la surface externe 31 de la rotule 30 peut présenter toute forme adaptée pour guider une inclinaison de l'ensemble de plateau 40 lors de son actionnement par le vérin 60.

La figure 3b illustre une vue 3D partielle de la partie interne 11 de l'arbre rotor 10, du support palier 20, de la rotule 30, du plateau interne 41 et d'un vérin 60, selon un exemple de réalisation. Le palier à roulement 43 entre le plateau interne 41 et le plateau externe 42, ainsi que le système d'articulation 50 de l'ensemble de plateau 40 par rapport aux pales 1, n'est pas représenté.

### Système d'articulation 50

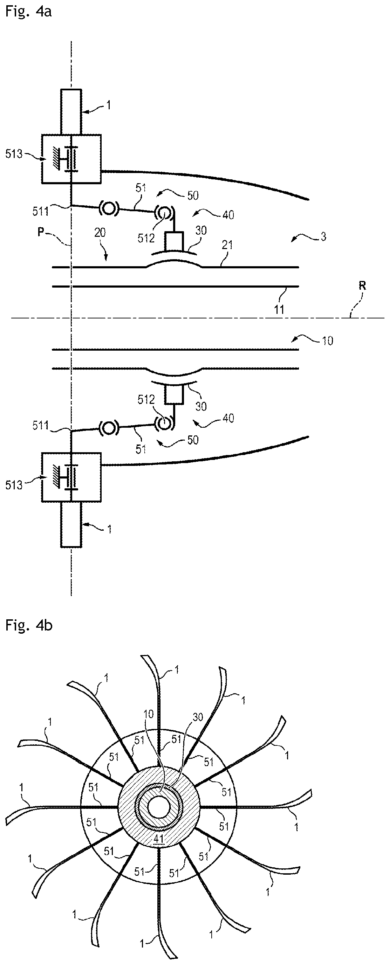

Le système d'articulation 50, illustré à titre d'exemple non limitatif en figures 4a, 5a, 6 et 7, peut comprendre un ensemble de bielles 51. Chaque bielle 51 peut être articulée en une première extrémité 511 sur une pale 1 associée et en une deuxième extrémité 512 sur l'ensemble de plateau 40. Les bielles 51 peuvent être montées mobiles en rotation autour de l'axe de rotation r de l'hélice. Le déplacement d'une bielle 51 peut entraîner une rotation de la pale 1 propre à modifier son calage. Ainsi, une inclinaison de l'ensemble de plateau 40 entraîne un déplacement correspondant des bielles 51 propre à modifier de manière cyclique le calage des pales 1. En particulier, chaque bielle 51 peut être reliée à une pale 1 par l'intermédiaire d'une liaison pivot 513.

En d'autres termes, une bielle 51 peut être déplacée de façon à faire tourner la pale 1 autour d'un pivot suivant que la bielle 51 est tirée ou poussée par le biais de l'ensemble de plateau 40. Lorsque la pale 1 tourne autour du pivot, son calage, c'est-à-dire l'angle formé entre d'une part un axe reliant le bord d'attaque au bord de fuite de la pale 1, et d'autre part l'axe de rotation r de l'hélice, est modifié en conséquence.

Ainsi, une inclinaison de l'ensemble de plateau 40 conditionne le déplacement des bielles 51. Lorsque l'ensemble de plateau 40 n'est pas incliné, les bielles 51 peuvent être sensiblement disposées dans la direction longitudinale. Lorsque l'ensemble de plateau 40 est incliné, chaque bielle 51 présente une position différente d'une autre bielle 51 et est déplacée de manière cyclique lors de la rotation de l'hélice, ce qui entraîne en conséquence une modification cyclique du calage des pales 1.

En particulier, chaque bielle 51 peut être reliée en sa deuxième extrémité 512 sur le plateau externe 42. Ainsi, une inclinaison de l'ensemble de plateau 40, donc du plateau externe 42, entraîne un déplacement cyclique de la deuxième extrémité 512 des bielles 51, donc de la première extrémité 511 des bielles 51, le déplacement cyclique de la première extrémité 511 des bielles 51 étant propre à modifier de manière cyclique le calage des pales 1.

Plus précisément, les bielles 51 peuvent être réparties sur le pourtour externe sensiblement circulaire du plateau externe 42, l'agencement des bielles 51 correspondant à l'agencement des pales 1. Ainsi, les premières extrémités des bielles 51 sont disposées sensiblement en cercle dans un plan normal P à l'axe de rotation r de l'hélice lorsque l'ensemble de plateau 40 n'est pas incliné.

Une inclinaison du plateau externe 42 par rapport au plan normal P provoque une inclinaison correspondante du pourtour externe sensiblement circulaire du plateau externe 42, donc du cercle formé par les premières extrémités 511 des bielles 51, ce qui entraîne un déplacement opposé et d'ampleur identique des premières extrémités 511 de deux bielles 51 diamétralement opposées sur le pourtour externe du plateau externe 42. Ainsi, les deux pales 1 associées aux deux bielles 51 diamétralement opposées subissent une modification opposée et d'amplitude identique de leur calage. Les pales 1 de ce système présentent donc un calage variable de manière continue et cyclique au cours d'une rotation de la pale 1.

### Vérin 60

Le système comprend un vérin 60 adapté pour incliner l'ensemble de plateau 40, le vérin 60 étant actionné en réponse à un effort mesuré par le capteur d'efforts 5. Le vérin 60 est illustré à titre d'exemple non limitatif en figures 3b, 3c, et 6 à 9.

L'actionnement du vérin 60 peut être propre à modifier l'inclinaison de l'ensemble de plateau 40, donc le calage des pales 1.

Le vérin 60 peut comprendre une tige susceptible d'être rentrée ou sortie par le biais d'un actionneur de vérin 60, la course du vérin 60 étant modifiée en conséquence.

Le vérin 60 peut être disposé sensiblement dans la direction longitudinale r. Le vérin 60 peut présenter une première extrémité 61 reliée au support palier 20 et une deuxième extrémité 62 reliée à l'ensemble de plateau 40. En particulier, la deuxième extrémité 62 du vérin 60 peut être montée sur le plateau interne 41 au niveau d'un pourtour externe du plateau interne 41, et la première extrémité 61 du vérin 60 peut être montée sur la partie tronconique 22 du support palier 20 en une position dans le plan normal P sensiblement identique à la position dans le plan normal P de la deuxième extrémité 62 du vérin 60. Ainsi, le vérin 60 est disposé selon une direction sensiblement longitudinale entre le support palier 20 et le plateau interne 41.

Le vérin 60 est actionné en translation le long de l'axe longitudinal r. Le déplacement du vérin 60 en translation selon la direction longitudinale entraîne un déplacement correspondant de la partie de l'ensemble de plateau 40 sur laquelle est montée le vérin 60. Ce déplacement entraîne une inclinaison de l'ensemble de plateau 40 dans une direction perpendiculaire à l'axe longitudinal r, l'inclinaison de l'ensemble de plateau 40 étant le cas échéant guidée par la rotule 30.

Ainsi, le déplacement du vérin 60 entraîne une modification de l'inclinaison du plateau interne 41, donc du plateau externe 42, ce qui entraîne un déplacement de la bielle 51 de calage de pale 1 propre à modifier le calage de la pale 1.

Le système de commande de calage cyclique de pales 1 peut comprendre plusieurs vérins 60 adaptés pour être déplacés par un ou plusieurs actionneurs.

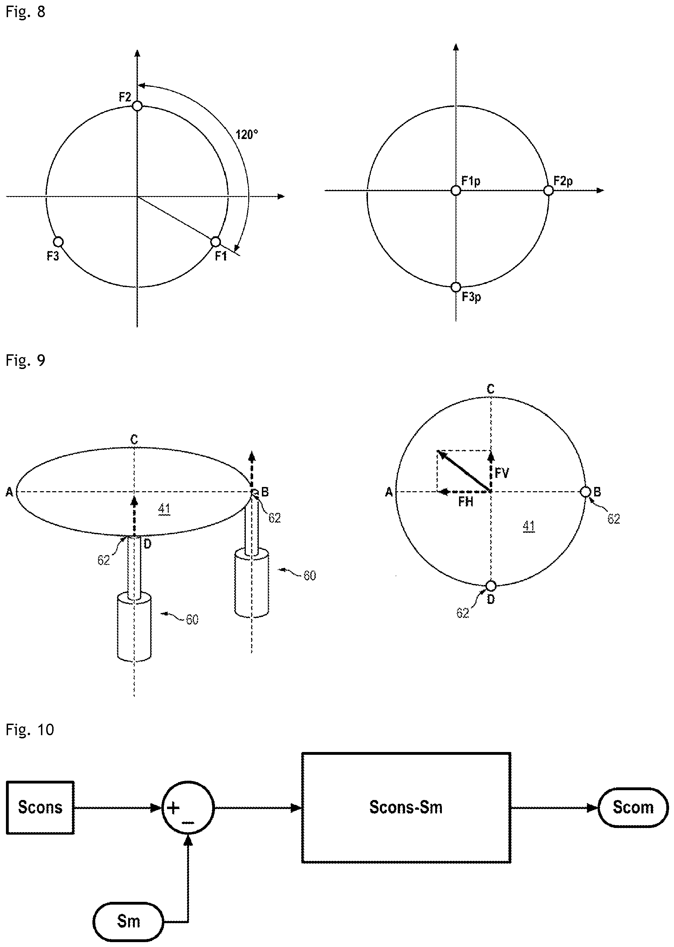

A titre d'exemple, le système de calage de pales 1 peut comprendre deux vérins 60 disposés sur le pourtour externe du plateau interne 41, les deux vérins 60 étant espacés d'un écart angulaire de 90° l'un par rapport à l'autre. Cette configuration est illustrée à titre d'exemple en figure 9. L'actionnement du premier vérin 60 permet alors d'incliner le plateau interne 41 suivant une première direction, et l'actionnement du deuxième vérin 60 permet d'incliner le plateau interne 41 suivant une deuxième direction, la deuxième direction étant perpendiculaire à la première direction.

L'actionnement du premier vérin 60, c'est-à-dire la rentrée ou la sortie de la tige du premier vérin 60, peut être réalisée indépendamment de l'actionnement du deuxième vérin 60. Ainsi, l'inclinaison de l'ensemble de plateau 40 selon une première et une deuxième direction peut être commandée de manière indépendante, et toute combinaison d'inclinaison de l'ensemble de plateau 40 selon la première et la deuxième direction est envisageable.

Le système peut comprendre en outre une bielle d'anti-rotation 65, illustrée à titre d'exemple non limitatif en figure 7. La bielle d'anti-rotation 65 peut présenter une première extrémité montée sur le support palier 20, en particulier au niveau de la partie sensiblement cylindrique 21 du support palier 20, et une deuxième extrémité 62 montée sur l'ensemble de plateau 40, en particulier sur le plateau interne 41. La bielle d'anti-rotation 65 empêche la bague intérieure du palier 43 de tourner, et empêche ainsi les vérins 60 de vriller.

### Loi de contrôle

L'actionnement du vérin 60 est contrôlé en réponse à un effort mesuré par le capteur d'efforts 5, l'actionnement du vérin 60 entraînant une modification cyclique du calage des pales 1 par le biais de l'inclinaison de l'ensemble de plateau 40. Un schéma illustrant un exemple de loi de contrôle de l'actionnement du vérin 60 est représenté en figure 10.

A cette fin, le système de commande du calage cyclique des pales 1 peut comprendre une unité de commande 70 adaptée pour générer un signal de commande Scom du calage des pales 1 à partir d'une comparaison entre un signal de mesure Sm issu du capteur d'efforts 5 et un signal de consigne Scons prédéterminé, le vérin 60 étant adapté pour être déplacé en réponse au signal de commande Scom.

Le signal de mesure Sm issu du capteur d'efforts 5 peut correspondre, par exemple dans le cas où le capteur d'efforts 5 est une jauge de contrainte, à une tension en sortie du capteur d'efforts 5, le signal de mesure Sm étant fonction de l'effort exercé sur le capteur d'efforts 5 dans la direction de mesure.

Le signal de consigne Scons a une valeur prédéterminée, qui correspond à un signal de mesure Sm en sortie du capteur d'efforts 5 obtenu lorsqu'un effort mesuré par le capteur d'efforts 5 dans la direction de mesure correspond à un effort prédéterminé dans la direction de mesure.

La comparaison entre le signal de mesure Sm et le signal de consigne Scon peut être réalisée par l'unité de commande 70 en temps réel au cours du vol. Ainsi, la commande cyclique du calage des pales 1 est effectuée en boucle fermée, c'est-à-dire que le système prend en considération l'influence du déplacement du vérin 60 sur le signal de mesure Sm en sortie du capteur d'efforts 5 pour commander le déplacement du vérin 60.

Lorsque le signal de mesure Sm correspond au signal de consigne Scons, l'unité de commande 70 peut générer un signal de commande Scom qui correspond à une position du vérin 60 inchangée, donc à un calage des pales 1 inchangé.

En revanche, lorsque le signal de mesure Sm est différent du signal de consigne Scons, l'unité de commande 70 peut générer un signal de commande Scom qui correspond à une modification de la position du vérin 60 de sorte à modifier le calage des pales 1 pour que le signal de mesure Sm en sortie du capteur d'efforts 5 se rapproche du signal de consigne Scons objectif.

La valeur du signal de commande Scom peut varier en fonction de la valeur de la différence entre le signal de mesure Sm et le signal de consigne Scons, de sorte à ce que l'amplitude de la modification du calage des pales 1 soit adaptée à la différence entre le signal de mesure Sm et le signal de consigne Scons.

Une boucle de commande, illustrée à titre d'exemple en figure 10, peut être mise en place par jeu de capteur d'efforts 5. Par exemple, pour un système à deux jeux de capteurs d'efforts 5, l'unité de commande 70 peut contrôler deux boucles de commande. Pour chaque boucle, l'unité de commande 70 génère un signal de commande Scom du calage des pales 1 à partir d'une comparaison entre un signal de mesure Sm issu du capteur d'efforts 5 associé à ladite boucle, et un signal de consigne Scons prédéterminé associé à ladite boucle.

Dans un premier mode de réalisation, le vérin 60 est situé dans le même plan que le capteur d'efforts 5. Le système comprend deux jeux de capteurs d'efforts 5, mesurant respectivement un effort horizontal et un effort vertical, et deux vérins 60, adaptés respectivement pour que leur actionnement entraîne un déplacement de l'ensemble de plateau 40 par rapport à l'horizontale et à la verticale. Le système comprend deux boucles de commande, chacune associée à un vérin 60. Le signal de commande Scom généré pour chaque boucle commande l'actionnement du vérin 60 associé.

Dans un deuxième mode de réalisation, le vérin 60 est situé dans un plan différent du plan du capteur d'efforts 5. Le système peut comprendre deux jeux de capteurs d'efforts 5, tels qu'illustrés à titre d'exemple en figure 3a, et trois vérins 60 répartis de manière régulière sur le pourtour du plateau interne 41, tels qu'illustrés à titre d'exemple en figure 8. Dans ce cas, l'unité de commande 70 doit effectuer un calcul pour commander les vérins 60.

Lorsque le système comprend trois vérins 60, le calage cyclique des pales 1 est modifié par un déplacement d'un ou de plusieurs des trois vérins 60 en réponse aux efforts dans le plan normal P mesurés par le ou les capteurs d'effort 5. L'unité de commande 70 engendre un signal de commande Scom adapté pour actionner chacun des vérins 60 indépendamment les uns des autres, de sorte à incliner l'ensemble de plateau 40 par rapport au plan normal P.

L'ensemble de plateau 40 peut être incliné de manière équivalente que le système comporte deux ou trois vérins 60. En effet, les efforts mesurés peuvent s'écrire dans la configuration à trois vérins 60 positionnés respectivement en F1, F2 et F3, ou dans la configuration à deux vérins 60 positionnés respectivement en F2p et F3p. Ainsi, la course des trois vérins 60 peut être modifiée pour commander le calage cyclique des pales 1 d'une manière équivalente à la modification du calage cyclique des pales 1 dans un système à deux vérins 60.

L'unité de commande 70 peut être adaptée pour générer un signal de commande Scom adapté pour actionner le vérin 60, donc modifier le calage des pales 1, lorsque le signal de mesure Sm diffère du signal de consigne Scons d'une différence prédéterminée pendant une durée prédéterminée.

En variante, seul un critère de différence prédéterminée entre le signal de mesure Sm et le signal de consigne Scons est pris en compte pour générer un signal de commande Scom adapté pour actionner le vérin 60 et donc modifier le calage des pales 1.

La différence prédéterminée peut être choisie de sorte à conserver un effort sur les pales 1 qui soit proche de l'effort de consigne souhaité. En d'autres termes, l'unité de commande 70 peut générer un signal de commande Scom correspondant à un actionnement du vérin 60, donc à une modification du calage des pales 1, lorsque l'effort dans le plan normal P mesuré par le capteur d'efforts 5 dépasse un effort prédéterminé pendant une durée prédéterminée.

L'effort prédéterminé peut être choisi de sorte à optimiser un fonctionnement de l'hélice, minimiser les chargements sur la suspension moteur et les pales 1 afin de réduire la masse de l'hélice et d'augmenter la durée de vie de l'hélice.

Selon un mode de réalisation, l'actionnement du vérin 60 est contrôlé afin d'annuler les efforts parasites exercés sur les pales 1 dans un plan normal P par rapport à l'axe de rotation r des pales 1. Dans ce cas, le signal de consigne Scons correspond à une annulation des efforts exercés dans le plan normal P. En d'autres termes, le signal de consigne Scons correspond à un signal de mesure Sm du capteur d'efforts 5 représentatif d'un effort mesuré par le capteur d'efforts 5 qui soit nul dans la direction de mesure. Le signal de consigne Scons peut être égal à 0.

Lorsque le signal de consigne Sc correspond à une annulation d'un effort dans le plan normal P, le calage des pales 1 est modifié lorsqu'un changement de direction de la poussée par rapport à une poussée longitudinale est détecté.

La durée prédéterminée peut être choisie de sorte à assurer une stabilité de réponse du système sans réactivité excessive. Par exemple, la durée prédéterminée peut être comprise entre 0,1 seconde et 10 secondes, de préférence entre 0,5 secondes et 3 secondes, de préférence d'environ une seconde. Ainsi, lorsque le capteur d'efforts 5 mesure un effort non longitudinal pendant une durée supérieure à une seconde, l'unité de commande 70 génère un signal de commande Scom tendant à déplacer le vérin 60 de sorte à annuler les efforts parasites non longitudinaux, donc à aboutir à un signal de mesure Sm de tension en sortie du capteur d'efforts 5 nulle.

Ainsi, le système permet de commander le calage cyclique des pales afin d'aligner le vecteur poussée de l'hélice avec l'axe longitudinal r, ce qui a pour effet de réduire, voire d'annuler, les moments 1P exercés sur les pales 1. Ainsi, la masse de l'hélice peut être réduite et la durée de vie de l'hélice est augmentée. Par ailleurs, le système réagit aux changements d'attitude d'avion, tout en évitant les biais de mesure, le système ne réagissant pas aux phénomènes plus rapides, tels que les rafales de vent.

En variante, le signal de mesure Sm peut être moyenné sur une durée donnée afin de ne pas prendre en compte la valeur du signal de mesure Sm à un instant t, mais plutôt la valeur du signal de mesure Sm moyennée sur la durée donnée. Ainsi, le système ne réagit pas aux phénomènes rapides.

L'unité de commande 70 peut comprendre un correcteur de type PID (Proportionnel, Intégrale, Dérivée).

Le système peut comprendre deux vérins 60 pouvant être actionnés de manière indépendante l'un de l'autre en translation le long de la direction longitudinale, les deux vérins 60 étant espacés d'un écart angulaire de 90°. Le système peut comprendre en outre deux jeux de capteurs d'efforts 5 mesurant les efforts exercés dans une première direction de mesure et une deuxième direction de mesure, les première et deuxième directions de mesure étant perpendiculaires et situées dans le plan normal P. Un effort exercé dans le plan normal P comprend une première composante d'effort dans la première direction de mesure, cette première composante d'effort étant mesurée par le premier capteur d'efforts 5 et une deuxième composante d'effort dans la deuxième direction de mesure, cette deuxième composante d'effort étant mesurée par le deuxième capteur d'efforts 5.

Le premier vérin 60 est disposé de sorte que son actionnement entraîne une inclinaison de l'ensemble de plateau 40 selon la première direction, et le deuxième vérin 60 est disposé de sorte que son actionnement entraîne une inclinaison de l'ensemble de plateau 40 selon la deuxième direction.

Lorsqu'un effort non nul est mesuré par le premier capteur d'efforts 5, c'est-à-dire lorsque la première composante d'effort est non nulle, l'unité de commande 70 engendre un signal de commande Scom déterminé de sorte à réduire la première composante d'effort en modifiant la course du premier vérin 60 afin d'incliner l'ensemble de plateau 40 selon la première direction. Le calage des pales 1 est ainsi modifié en réponse à la mesure d'un effort non nul par le premier capteur d'efforts 5. De même, lorsqu'un effort non nul est mesuré par le deuxième capteur d'efforts 5, l'unité de commande 70 engendre un signal de commande Scom déterminé de sorte à déplacer le deuxième vérin 60 pour modifier le calage des pales 1 en vue de réduire la deuxième composante d'effort.

Un capteur d'efforts 5 peut être associé à un vérin 60, de sorte que le déplacement du vérin 60 dans la direction longitudinale incline le plateau interne 41 dans la direction de mesure du capteur d'efforts 5. En variante, le nombre de vérins 60 et de capteurs d'efforts 5 peut être différent, et/ou la direction de mesure être décalée par rapport à la direction d'inclinaison de l'ensemble de plateau 40 par un vérin 60. Dans ce cas, la composante d'un effort mesuré dans une direction de mesure est projetée dans une direction d'inclinaison de l'ensemble de plateau 40. Le signal de mesure Sm comparé au signal de consigne Scon correspond à la somme des projections dans la direction d'inclinaison de l'ensemble de plateau 40 des signaux de mesure des capteurs d'efforts 5.

A titre d'exemple, dans l'illustration de la figure 9, un premier vérin 60 permet d'incliner le plateau en rotation suivant l'axe AB, et ainsi d'agir sur l'effort FV, et un deuxième vérin 60 permet d'incliner le plateau en rotation suivant l'axe CD, et ainsi d'agir sur l'effort FH.

Ainsi, lorsqu'un effort dans la direction AB est mesuré, la position du deuxième vérin 60 est modifiée de manière à incliner l'ensemble de plateau 40 selon la direction CD, ce qui tend à diminuer l'incidence des pales 1 au point A, entraînant un effort de poussée moindre sur la pale 1 du côté du point A, ce qui entraîne une diminution de l'effort dans la direction AB. De même, lorsqu'un effort dans la direction CD est mesuré, le premier vérin est alors déplacé de manière à incliner l'ensemble de plateau 40 selon la direction AB afin de diminuer l'effort dans la direction CD.

### Système de calage collectif

Le système de commande de calage cyclique de pales 1 peut en outre comprendre un système de commande de calage collectif des pales 1 configuré pour modifier simultanément et de manière identique le calage de l'ensemble des pales 1 de l'hélice.

Le système de commande du calage collectif des pales 1 peut être configuré pour déplacer l'ensemble de plateau 40 en translation selon la direction longitudinale tout en conservant une même inclinaison de l'ensemble de plateau 40, de sorte à modifier le calage de chacune des pales 1 de manière identique. La figure 4b illustre un exemple de configuration dans laquelle le calage de toutes les pales est identique.

En particulier, le système de commande du calage collectif des pales 1 peut être configuré pour déplacer chacune des bielles 51 de manière identique de sorte à modifier le calage de chacune des pales 1 de manière identique.

Le calage collectif des pales 1 et le calage cyclique des pales 1 peuvent être commandés indépendamment l'un de l'autre. Le calage collectif des pales 1 est indépendant du calage cyclique des pales 1 et ne dépend pas du calage cyclique. Le calage cyclique des pales 1 peut dépendre du calage collectif si celui-ci modifie les efforts exercés sur les pales 1.

Le système de commande du calage collectif des pales 1 peut comprendre un actionneur adapté pour actionner un vérin 60. Le vérin 60 peut correspondre à un vérin 60 utilisé pour modifier le calage cyclique des pales 1 ou à un vérin 60 supplémentaire dédié au calage collectif des pales 1. Pour un système comprenant plusieurs vérins 60, la course de tous les vérins 60 est modifiée simultanément et de la même valeur de sorte à déplacer en translation le long de l'axe longitudinal r l'ensemble de plateau 40, et le cas échéant la rotule 30. Ainsi, le calage de l'ensemble des pales 1 est modifiée simultanément et d'une valeur identique, de sorte que les pales 1 sont toutes soumises à un calage identique. Mais l'inclinaison de l'ensemble de plateau 40 n'est pas modifiée, de sorte que les pales 1 ne sont pas soumises à un calage cyclique.

A titre d'exemple, le système de commande de calage des pales 1 peut comprendre trois vérins 60 répartis de manière régulière sur le pourtour du plateau interne 41, les trois vérins 60 étant espacés d'un écart angulaire de 120° l'un par rapport à l'autre. Le système à trois vérins 60 peut permettre à la fois une inclinaison de l'ensemble de plateau 40 par rapport au plan P dans toute direction d'inclinaison normale à l'axe de rotation r de l'hélice, et une translation de l'ensemble de plateau 40 le long de la direction longitudinale.

Le calage collectif des pales 1 est modifié par un déplacement en translation identique, c'est-à-dire une modification identique de la course de chacun des trois vérins 60. Cela entraîne un déplacement en translation selon l'axe longitudinal r par rapport au support palier 20 de l'ensemble de plateau 40 sans modification de son inclinaison, ce qui entraîne un déplacement identique de toutes les bielles 51 reliées en une première extrémité 511 à une pale 1 et en une deuxième extrémité 512 à l'ensemble de plateau 40, et donc une modification du calage des pales 1 identiques pour toutes les pales 1.

Le calage cyclique des pales 1 est modifié par une modification différente de la course d'un ou plusieurs des trois vérins 60, ce qui entraîne une inclinaison de l'ensemble de plateau 40 par rapport au plan normal P.

Ainsi qu'illustré à titre d'exemple sur la figure 8, un système à trois vérins équivaut à un système à deux vérins comportant en outre un troisième vérin dédié au calage collectif. En effet, les efforts mesurés dans le plan normal qui sont compensés par trois vérins 60 positionnés en F1, F2 et F3, peuvent s'écrire dans la configuration à deux vérins 60, positionnés en F2p et F3p, la troisième composante s'appliquant au centre de l'ensemble de plateau 40, en F1p, de sorte à modifier uniquement le calage collectif des pales 1.

D'autres modes de réalisation peuvent être envisagés et une personne du métier peut facilement modifier les modes ou exemples de réalisation exposés ci-dessus ou en envisager d'autres tout en restant dans la portée de l'invention.

## Revendications

1. Système de commande de calage cyclique de pales (1) d'une hélice d'une turbomachine, l'hélice comprenant un ensemble de pales (1) mobiles en rotation autour d'un axe de rotation (r) par rapport à un repère stator de la turbomachine, les pales (1) étant disposées dans un plan normal à l'axe de rotation (r) de l'hélice, appelé plan normal (P),
le système étant tel qu'il comprend :
- un ensemble de plateau (40) inclinable par rapport au plan normal (P),
- un système d'articulation (50) articulant l'ensemble de plateau (40) par rapport aux pales (1) de sorte qu'une inclinaison de l'ensemble de plateau (40) entraîne une modification cyclique du calage des pales (1),
et tel qu'il comprend :
- un capteur d'efforts (5) monté fixe dans le repère stator, le capteur d'efforts (5) étant adapté pour mesurer un effort exercé dans le plan normal (P) par un flux d'air en entrée des pales (1) de l'hélice,
- un vérin (60) adapté pour incliner l'ensemble de plateau (40), le vérin (60) étant adapté pour être actionné en réponse à un effort mesuré par le capteur d'efforts (5).

2. Système de commande de calage cyclique de pales (1) selon la revendication 1, dans lequel le capteur d'efforts (5) comprend une jauge de contrainte et est adapté pour être positionné au niveau d'un support palier (20) d'un carter intermédiaire de la turbomachine.

3. Système de commande de calage cyclique de pales (1) selon la revendication 1 ou la revendication 2, comprenant un premier jeu de capteurs d'efforts (501) adapté pour mesurer un effort dans une première direction du plan normal (P) et un deuxième jeu de capteurs d'efforts (502) adapté pour mesurer un effort dans une deuxième direction du plan normal (P), la deuxième direction étant perpendiculaire à la première direction, le système comprenant en outre un premier vérin (60) adapté pour être actionné en réponse à un effort mesuré par le premier jeu de capteurs d'efforts (501), et un deuxième vérin (60) adapté pour être actionné en réponse à un effort mesuré par le deuxième jeu de capteurs d'efforts (502).

4. Système de commande de calage cyclique de pales (1) selon l'une quelconque des revendications 1 à 3, dans lequel l'ensemble de plateau (40) comprend un plateau interne (41) monté fixe dans le repère stator et un plateau externe (42) monté mobile en rotation autour de l'axe de rotation (r) de l'hélice, le plateau interne (41) et le plateau externe (42) étant séparés l'un de l'autre par le biais d'un palier à roulement (43) de sorte que le plateau interne (41) et le plateau externe (42) sont indépendants en rotation autour de l'axe de rotation (r) et sont solidaires en inclinaison par rapport au plan normal (P), dans lequel le vérin (60) est actionné de sorte à modifier l'inclinaison du plateau interne (41), et dans lequel le système d'articulation (50) articule le plateau externe (42) par rapport aux pales (1).

5. Système de commande de calage cyclique de pales (1) selon l'une quelconque des revendications 1 à 4, comprenant en outre une rotule (30) comprenant une surface externe (31) bombée, dans lequel l'ensemble de plateau (40) comprend une surface interne (411) de forme complémentaire de la surface externe (31) de la rotule (30) et positionnée au contact de la surface externe (31) de la rotule (30), de sorte que la surface externe (31) de la rotule (30) guide un déplacement en inclinaison de l'ensemble de plateau (40).

6. Système de commande de calage cyclique de pales (1) selon l'une quelconque des revendications 1 à 5, dans lequel le système d'articulation (50) comporte un ensemble de bielles (51), chaque bielle (51) étant articulée en une première extrémité (511) sur une pale (1) associée par le biais d'une liaison pivot (513), et en une deuxième extrémité (512) sur l'ensemble de plateau (40), les bielles (51) étant montées mobiles en rotation autour de l'axe de rotation (r) de l'hélice, de sorte qu'une inclinaison de l'ensemble de plateau (40) entraîne un déplacement correspondant des bielles (51) propre à modifier de manière cyclique le calage des pales (1).

7. Système de commande de calage cyclique de pales (1) selon l'une quelconque des revendications 1 à 6, comprenant en outre une unité de commande (70) adaptée pour générer un signal de commande (Scom) du calage des pales (1) à partir d'une comparaison entre un signal de mesure (Sm) issu du capteur d'efforts (5) et un signal de consigne (Scons) prédéterminé, le signal de commande (Scom) étant adapté pour actionner le vérin (60) lorsque le signal de mesure (Sm) diffère du signal de consigne Scons d'une différence prédéterminée pendant une durée prédéterminée.

8. Système de commande de calage cyclique de pales (1) selon l'une quelconque des revendications 1 à 7, comprenant en outre un système de commande du calage collectif des pales (1) configuré pour déplacer l'ensemble de plateau (40) en translation selon la direction longitudinale tout en conservant une même inclinaison de l'ensemble de plateau (40), de sorte à modifier le calage de chacune des pales (1) de manière identique, le calage collectif des pales (1) étant indépendant d'un calage cyclique des pales (1).

9. Turbomachine comprenant un système de commande de calage cyclique de pales (1) d'une hélice selon l'une quelconque des revendications 1 à 8.

10. Aéronef comprenant un système de commande de calage cyclique de pales (1) d'une hélice de turbomachine selon l'une quelconque des revendications 1 à 8.

## Patentansprüche

1. System zur Steuerung der zyklischen Verstellung von Blättern (1) eines Propellers einer Turbomaschine, wobei der Propeller eine Anordnung von Blättern (1) umfasst, die um eine Rotationsachse (r) im Verhältnis zu einem Statorbezug der Turbomaschine rotationsbeweglich sind, wobei die Blätter (1) in einer Normalebene zur Rotationsachse (r) des Propellers, bezeichnet als Normalebene (P), angeordnet sind,
wobei das System derart ist, dass es umfasst:
- eine im Verhältnis zur Normalebene (P) neigbare Plattenanordnung (40),
- ein Gelenksystem (50), das die Plattenanordnung (40) im Verhältnis zu den Blättern (1) derart anlenkt, dass eine Neigung der Plattenanordnung (40) eine zyklische Änderung der Verstellung der Blätter (1) bewirkt,
und derart, dass es umfasst:
- einen Kraftsensor (5), der fest im Statorbezug angebracht ist, wobei der Kraftsensor (5) geeignet ist, eine Kraft zu messen, die in der Normalebene (P) von einem in die Blätter (1) des Propellers eintretenden Luftstrom ausgeübt wird,
- einen Zylinder (60), der geeignet ist, die Plattenanordnung (40) zu neigen, wobei der Zylinder (60) geeignet ist, als Antwort auf eine vom Kraftsensor (5) gemessene Kraft betätigt zu werden.

2. System zur Steuerung der zyklischen Verstellung von Blättern (1) nach Anspruch 1, wobei der Kraftsensor (5) einen Dehnungsmesser umfasst und geeignet ist, im Bereich eines Lagerträgers (20) eines Zwischengehäuses der Turbomaschine positioniert zu sein.

3. System zur Steuerung der zyklischen Verstellung von Blättern (1) nach Anspruch 1 oder Anspruch 2, umfassend einen ersten Kraftsensorsatz (501), der geeignet ist, eine Kraft in einer ersten Richtung der Normalebene (P) zu messen, und einen zweiten Kraftsensorsatz (502), der geeignet ist, eine Kraft in einer zweiten Richtung der Normalebene (P) zu messen, wobei die zweite Richtung senkrecht zu der ersten Richtung ist, wobei das System ferner einen ersten Zylinder (60) umfasst, der geeignet ist, als Antwort auf eine von dem ersten Kraftsensorsatz (501) gemessene Kraft betätigt zu werden, und einen zweiten Zylinder (60), der geeignet ist, als Antwort auf eine von dem zweiten Kraftsensorsatz (502) gemessene Kraft betätigt zu werden.

4. System zur Steuerung der zyklischen Verstellung von Blättern (1) nach einem der Ansprüche 1 bis 3, wobei die Plattenanordnung (40) eine innere Platte (41) umfasst, die fest im Statorbezug angebracht ist, und eine äußere Platte (42), die um die Rotationsachse (r) des Propellers rotationsbeweglich angebracht ist, wobei die innere Platte (41) und die äußere Platte (42) durch ein Wälzlager (43) derart voneinander getrennt sind, dass die innere Platte (41) und die äußere Platte (42) um die Rotationsachse (r) rotatorisch unabhängig sind und im Verhältnis zur Normalebene (P) geneigt fest verbunden sind, wobei der Zylinder (60) derart betätigt wird, dass die Neigung der inneren Platte (41) geändert wird, und wobei das Gelenksystem (50) die äußere Platte (42) im Verhältnis zu den Blättern (1) anlenkt.

5. System zur Steuerung der zyklischen Verstellung von Blättern (1) nach einem der Ansprüche 1 bis 4, umfassend ferner ein Kugelgelenk (30), das eine gewölbte äußere Oberfläche (31) umfasst, wobei die Plattenanordnung (40) eine zur äußeren Oberfläche (31) des Kugelgelenks (30) komplementäre und im Kontakt mit der äußeren Oberfläche (31) des Kugelgelenks (30) derart positionierte interne Oberfläche (411) umfasst, dass die äußere Oberfläche (31) des Kugelgelenks (30) eine Neigungsbewegung der Plattenanordnung (40) führt.

6. System zur Steuerung der zyklischen Verstellung von Blättern (1) nach einem der Ansprüche 1 bis 5, wobei das Gelenksystem (50) eine Anordnung von Pleuelstangen (51) aufweist, wobei jede Pleuelstange (51) in einem ersten Ende (511) an einem Blatt (1) angelenkt ist, das durch eine Drehzapfenverbindung (513) zugeordnet ist, und in einem zweiten Ende (512) an der Plattenanordnung (40), wobei die Pleuelstangen (51) um die Rotationsachse (r) des Propellers derart rotationsbeweglich angebracht sind, dass eine Neigung der Plattenanordnung (40) eine entsprechende Bewegung der Pleuelstangen (51) bewirkt, die imstande ist, die Verstellung der Blätter (1) zyklisch zu ändern.

7. System zur Steuerung der zyklischen Verstellung von Blättern (1) nach einem der Ansprüche 1 bis 6, umfassend ferner eine Steuereinheit (70), die geeignet ist, ein Steuersignal (Scom) für die Verstellung der Blätter (1) ausgehend von einem Vergleich zwischen einem Messsignal (Sm) des Kraftsensors (5) und einem vorbestimmten Sollwertsignal (Scons) zu erzeugen, wobei das Steuersignal (Scom) geeignet ist, den Zylinder (60) zu betätigen, wenn das Messsignal (Sm) vom Sollwertsignal (Scons) während einer vorbestimmten Dauer um einen vorbestimmte Unterschied abweicht.

8. System zur Steuerung der zyklischen Verstellung von Blättern (1) nach einem der Ansprüche 1 bis 7, umfassend ferner ein System zur Steuerung der kollektiven Verstellung der Blätter (1), das dazu ausgelegt ist, die Plattenanordnung (40) in der Längsrichtung unter Beibehaltung der gleichen Neigung der Plattenanordnung (40) translatorisch derart zu bewegen, dass die Verstellung jedes Blatts (1) identisch geändert wird, wobei die kollektive Verstellung der Blätter (1) von einer zyklischen Verstellung der Blätter (1) unabhängig ist.

9. Turbomaschine, umfassend ein System zur Steuerung der zyklischen Verstellung von Blättern (1) eines Propellers nach einem der Ansprüche 1 bis 8.

10. Flugzeug, umfassend ein System zur Steuerung der zyklischen Verstellung von Blättern (1) eines Propellers einer Turbomaschine nach einem der Ansprüche 1 bis 8.

## Claims

1. A system for controlling the cyclic pitch of blades (1) of a propeller of a turbomachine, the propeller comprising a set of blades (1) movable in rotation around an axis of rotation (r) relative to a stator frame of reference of the turbomachine, the blades (1) being arranged in a plane normal to the axis of rotation (r) of the propeller, called normal plane (P),
the system being such that it comprises:
- a plate assembly (40) that can be inclined relative to the normal plane (P),
- an articulation system (50) articulating the plate assembly (40) relative to the blades (1) so that an inclination of the plate assembly (40) causes a cyclic modification of the pitch of the blades (1),
and such that it comprises:
- a force sensor (5), mounted fixed in the stator frame of reference, the force sensor (5) being suitable for measuring a force exerted in the normal plane (P) by an air flow at the inlet of the propeller blades (1),
- a cylinder (60) suitable for inclining the plate assembly (40), the cylinder (60) being suitable to be actuated in response to a force measured by the force sensor (5).

2. The system for controlling the cyclic pitch of blades (1) according to claim 1, wherein the force sensor (5) comprises a strain gauge and is suitable for being positioned at a bearing support (20) of an intermediate casing of the turbomachine.

3. The system for controlling the cyclic pitch of blades (1) according to claim 1 or claim 2, comprising a first set of force sensors (501) suitable for measuring a force in a first direction of the normal plane (P) and a second set of force sensors (502) suitable for measuring a force in a second direction of the normal plane (P), the second direction being perpendicular to the first direction, the system further comprising a first cylinder (60) suitable for being actuated in response to a force measured by the first set of force sensors (501), and a second cylinder (60) suitable for being actuated in response to a force measured by the second set of force sensors (502).

4. The system for controlling the cyclic pitch of blades (1) according to any one of claims 1 to 3, wherein the plate assembly (40) comprises an inner plate (41) mounted fixed in the stator frame of reference and an outer plate (42) mounted movable in rotation around the axis of rotation (r) of the propeller, the inner plate (41) and the outer plate (42) being separated from one another by means of an antifriction bearing (43) so that the inner plate (41) and the outer plate (42) are independent in rotation around the axis of rotation (r) and are integral in inclination relative to the normal plane (P), wherein the cylinder (60) is actuated so as to modify the inclination of the inner plate (41), and wherein the articulation system (50) articulates the outer plate (42) relative to the blades (1).

5. The system for controlling the cyclic pitch of blades (1) according to any one of claims 1 to 4, further comprising a ball (30) comprising a domed outer surface (31), wherein the plate assembly (40) comprises an inner surface (411) with a shape complementary to the outer surface (31) of the ball (30) and positioned in contact with the outer surface (31) of the ball (30), so that the outer surface (31) of the ball (30) guides a displacement in inclination of the plate assembly (40).

6. The system for controlling the cyclic pitch of blades (1) according to any one of claims 1 to 5, wherein the articulation system (50) includes a set of connecting rods (51), each connecting rod (51) being articulated at a first end (511) on an associated blade (1) by means of a pivoting link (513), and at a second end (512) on the plate assembly (40), the connecting rods (51) being mounted movable in rotation around the axis of rotation (r) of the propeller, so that an inclination of the plate assembly (40) causes a corresponding displacement of the connecting rods (51) capable of cyclically modifying the pitch of the blades (1).

7. The system for controlling the cyclic pitch of blades (1) according to any one of claims 1 to 6, further comprising a control unit (70) suitable for generating a blade (1) pitch control signal (Scom) based on a comparison between a measurement signal (Sm) originating in the force sensor (5) and a predetermined set point signal (Scons), the control signal (Scom) being suitable for actuating the cylinder (60) when the measurement signal (Sm) differs from the set point signal Scons by a predetermined difference for a predetermined period.

8. The system for controlling the cyclic pitch of blades (1) according to any one of claims 1 to 7, further comprising a system for controlling the collective pitch of blades (1) configured to displace the plate assembly (40) in translation in the longitudinal direction while retaining a same inclination of the plate assembly (40), so as to modify the pitch of each of the blades (1) identically, the collective pitch of the blades (1) being independent of a cyclic pitch of the blades (1).

9. A turbomachine comprising a system for controlling the cyclic pitch of blades (1) of a propeller according to any one of claims 1 to 8.

10. An aircraft comprising a system for controlling the cyclic pitch of blades (1) of a turbomachine propeller according to any one of claims 1 to 8.
